Europäisches Patentamt

(19) European Patent Office

Office européen des brevets

(11) Veröffentlichungsnummer: **0 076 940**
A1

(12) **EUROPÄISCHE PATENTANMELDUNG**

(21) Anmeldenummer: **82108654.3**

(51) Int. Cl.³: **G 01 F 1/05**, G 01 F 1/28

(22) Anmeldetag: **18.09.82**

(30) Priorität: 02.10.81 DE 3139218
09.06.82 DE 3221775

(71) Anmelder: **ROBERT BOSCH GMBH, Postfach 50, D-7000 Stuttgart 1 (DE)**

(43) Veröffentlichungstag der Anmeldung: **20.04.83**
**Patentblatt 83/16**

(72) Erfinder: **Bräutigam, Rolf, Ing.grad., Kirchr.-Baumäcker 14, D-8551 Markt Igensdorf (DE)**
Erfinder: **Haas, Lothar, Kastanienweg 10, D-8504 Stein (DE)**
Erfinder: **Wesemeyer, Jürgen, Dipl.-Ing., Klosterweg 122, D-8500 Nürnberg (DE)**
Erfinder: **Hellmann, Heinz-Dieter, Dr. Dr.-Ing., Beim Bergtor 28, D-6718 Grünstadt (DE)**
Erfinder: **Hergt, Peter, Dipl.-Ing., Richard-Wagner-Strasse 28, D-6700 Ludwigshafen (DE)**

(84) Benannte Vertragsstaaten: **DE FR GB IT SE**

(54) **Durchflussmesser für Flüssigkeiten.**

(57) Es wird ein Durchflußmesser für Flüssigkeiten vorgeschlagen, der zur Ermittlung der durchströmenden Flüssigkeitsmenge dient. Der Durchflußmesser (10) enthält einen Rotor, der in einem Strömungskanal (13) gelagert und von einer Ausströmkammer (15) umgeben ist. Die Flüssigkeit gelangt im Bereich der Rotorachse in den Rotor (14), und tritt am Außenumfang des Rotors (14) durch Öffnungen (24) in Umfangsrichtung wieder aus. Durch die Rückstoßkraft der austretenden Flüssigkeit wird der Rotor gedreht und die Drehung des Rotors (14) wird in elektrische Signale umgewandelt und ausgewertet. Der erfindungsgemäße Durchflußmesser läßt sich sowohl zur Anzeige des Kraftstoffverbrauchs in einem Kraftfahrzeug als auch zur Anzeige des Wasserverbrauchs oder des Verbrauchs anderer Flüssigkeiten verwenden. In gleicher Weise läßt er sich zur Ermittlung der Strömungsgeschwindigkeit einer Flüssigkeit einsetzen.

R. 17375 i.P.
1.4.1982  Ws/Hm

ROBERT BOSCH GMBH, 7000 STUTTGART 1

## Durchflußmesser für Flüssigkeiten

Stand der Technik

Die Erfindung geht aus von einem Durchflußmesser für Flüssigkeiten nach der Gattung des Hauptanspruchs.

Aus der US-PS 3 867 840 ist ein Flüssigkeitsmesser bekannt, bei dem die zu messende Flüssigkeit tangential in eine Rotorkammer einströmt und durch eine axiale Öffnung aus ihr wieder austritt. In der Rotorkammer ist ein Rotor mit einem Flügelrad drehbar angeordnet, wobei die Rotorflügel durch die einströmende Flüssigkeit beaufschlagt werden und den Rotor drehen. Die Drehung des Rotors wird über eine optisch-elektrische Auswerteeinrichtung gemessen und auf diese Weise die Durchflußgeschwindigkeit der Flüssigkeit ermittelt. Bei dieser Lösung ist jedoch nachteilig, daß der Rotor durch seine Massenträgheit sowie durch die in der Rotorkammer umlaufende

. . .

Flüssigkeit noch weiter gedreht wird, wenn der Flüssigkeitsstrom bereits abgeschaltet ist. Außerdem kann die zu messende Flüssigkeit an den Rotorflügeln vorbei zum Ausströmkanal fließen, so daß die Meßgenauigkeit insbesondere bei kleinen Durchflußmengen nicht ausreicht.

Bei einem anderen, bekannten Durchflußmesser ist der Rotor unmittelbar im Strömungskanal angeordnet (DE-OS 29 11 826). Der trommelförmige Rotor hat an seinem Umfang schraubenförmig umlaufende Rippen. Vor dem Rotor sind im Strömungskanal stromaufwärts axiale Rippen angeordnet, die den Flüssigkeitsstrom gleichgerichtet mit einer axialen Strömung zum Rotor führen. Die am Rotor außen entlang fließende Flüssigkeit trifft auf die schraubenförmig verlaufenden Rotorrippen, wodurch der Rotor gedreht wird. Auch diese Ausführung hat den Nachteil, daß ein Großteil der zu messenden Flüssigkeit an den Rotorrippen vorbeifließt und daher für kleinere Durchflußmengen keine ausreichend genauen Meßergebnisse liefert. Außerdem wird auch hier die Messung der Durchflußmenge durch den nachlaufenden Rotor bei abgeschaltetem Flüssigkeitsstrom verfälscht.

Mit der vorliegenden Lösung wird angestrebt, bei einem Durchflußmesser für Flüssigkeiten auch sehr kleine Durchflußmengen, wie sie beispielsweise für den Kraftstoffverbrauch einer Brennkraftmaschine im Leerlauf auftreten, möglichst genau zu erfassen und einen Nachlauf des Rotors bei abgeschaltetem Flüssigkeitsstrom zu stoppen.

Vorteile der Erfindung

Der erfindungsgemäße Durchflußmesser für Flüssigkeiten mit den kennzeichnenden Merkmalen des Hauptanspruchs hat den Vorteil, daß die zu messende Flüssigkeit durch

...

den Rotor von innen nach außen fließt, so daß nur beim
Austritt von Flüssigkeit am Außenumfang des Rotors dieser
durch die Rückstoßkraft der austretenden Flüssigkeit
gedreht wird. Da auch beim Durchfluß kleiner Flüssigkeitsmengen diese aus den Rotoröffnungen austreten müssen
und dadurch Rückstoßkräfte am Rotor wirksam werden,
können auch kleine Flüssigkeitsmengen mit der erforderlichen Genauigkeit gemessen werden. Eine entsprechende
opto-elektrische oder elektromagnetische Erfassung der
Rotorbewegung kann dabei zur Bestimmung des augenblicklichen Kraftstoffverbrauchs im Kraftfahrzeug sowie zur
Ermittlung der verbrauchten Kraftstoffmenge verwendet
werden. Als weiterer Vorteil ist anzusehen, daß in der

Ausströmkammer die am Rotor austretende Flüssigkeit zumindest teilweise in entgegengesetzter Richtung zum Rotor
umläuft und diesen bei Nachlauf abbremst.

Durch die in den Unteransprüchen aufgeführten Maßnahmen
sind vorteilhafte Weiterbildungen und Verbesserungen der
im Hauptanspruch angegebenen Merkmale möglich. Besonders
vorteilhaft ist ein kreisscheibenförmiger Rotor, mit
zwei vom Bereich der Rotorachse zu den Austrittsöffnungen führenden Laufschaufeln, die in Form einer Spirale
nach außen verlaufen. Auf diese Weise kann eine Wirbel-
und Gasbildung der Flüssigkeit im Rotor sowie in der Rotorkammer verhindert werden. Um im Strömungskanal vor dem
Rotor einen gleichgerichteten Flüssigkeitsstrom zu bekommen, wird zweckmäßigerweise der Rotor auf einer Welle
befestigt, die im Strömungskanal gelagert ist. Die Leitrippen werden an der Innenwandung des Strömungskanals angeordnet. Bei dieser Ausführung ist es für das Abbremsen
des Rotors beim Nachlauf besonders vorteilhaft, wenn die
Innenkanten der Laufschaufeln zum Strömungskanal hin abgeschrägt sind.

Eine besonders günstige Kombination zweier erfindungsgemäßer Durchflußmesser ergibt sich bei einem Leitungssystem, bei dem nur ein Teil der geförderten Flüssigkeit verbraucht wird und der restliche Teil über eine zweite Leitung zurückfließt. Für diesen Fall ist es möglich, auf der gleichen Rotorwelle einen zweiten Rotor in einer zweiten Ausströmkammer und mit einem zweiten Strömungskanal für die zurückfließende, nicht verbrauchte Flüssigkeit vorzusehen, der die entgegengesetzte Drehrichtung hat.

Außerdem besteht bei dem Durchflußmesser nach dem Hauptanspruch die Möglichkeit, durch einen einstellbaren Bypass zum Rotor die Drehgeschwindigkeit des Rotors bzw. die abgegebene Impulszahl bei einer bestimmten Durchflußgeschwindigkeit in vorteilhafter Weise auf einen vorgegebenen Wert zu eichen. Dazu wird der Einlaßraum über einen Eichkanal unter Umgehung des Rotors mit der Ausströmkammer verbunden, dessen Querschnitt durch eine Blende einstellbar ist.

Zeichnung

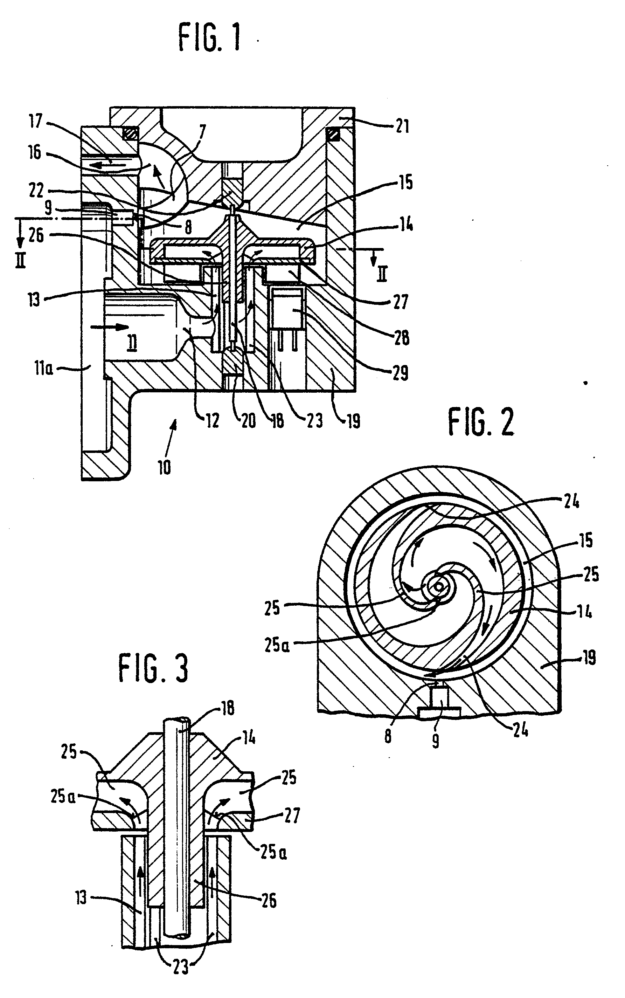

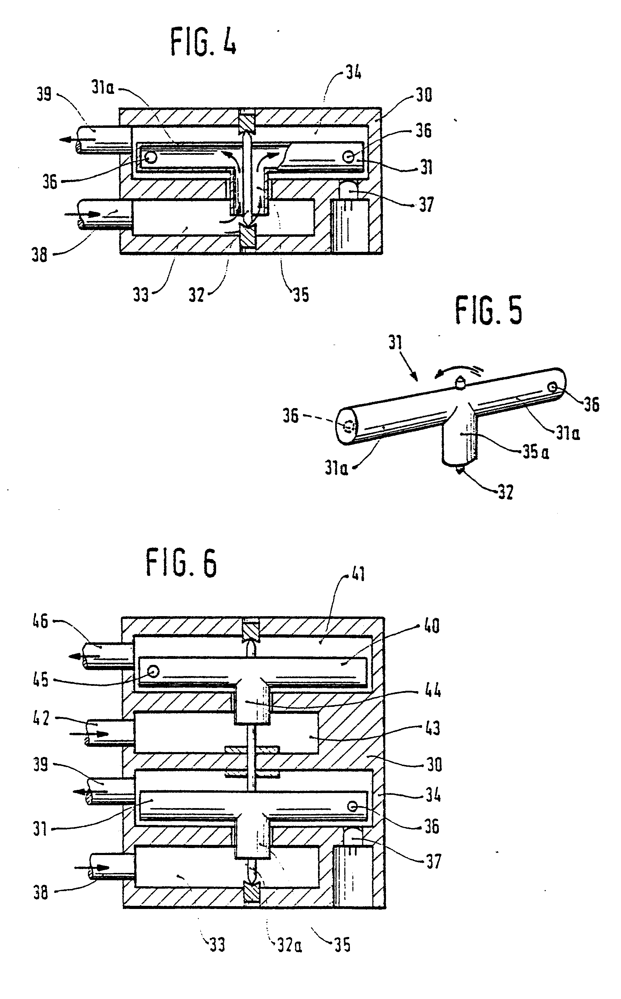

Drei Ausführungsbeispiele der Erfindung sind in der Zeichnung dargestellt und in der nachfolgenden Beschreibung näher erläutert. Es zeigen Figur 1 einen erfindungsgemäßen Durchflußmesser im Längsschnitt mit einem diskusförmigen Rotor, Figur 2 einen Querschnitt des Durchflußmessers, Figur 3 einen Ausschnitt des Durchflußmessers im Bereich der Rotorachse, Figur 4 zeigt ein weiteres Ausführungsbeispiel mit einem T-förmigen Rohrabschnitt als Rotor, Figur 5 zeigt den Rotor aus Figur 4 in raumbildlicher Darstellung und Figur 6 zeigt in einem weiteren Ausführungsbeispiel einen Durchflußmesser mit zwei gegensinnig arbeitende Rotoren auf der gleichen Rotorwelle.

Beschreibung der Ausführungsbeispiele

In Figur 1 ist der Durchflußmesser in einer Kraftstoffleitung einer Brennkraftmaschine mit 10 bezeichnet. Der Kraftstoff wird durch eine nicht dargestellte Kraftstoffpumpe gefördert und fließt dabei durch den Durchflußmesser 10. Die Flußrichtung des Kraftstoffs ist durch Pfeile dargestellt. Er
gelangt von einem Einlaßraum 11 über eine Einlaßöffnung 12
in einen Strömungskanal 13, von dort durch einen Rotor 14
in eine Ausströmkammer 15 und schließlich über eine Auslaßöffnung 16 zum Auslaßkanal 17. Der Einlaßraum 11 ist an
eine nicht dargestellte Zulaufleitung und der Auslaßkanal
17 an eine Ablaufleitung angeschlossen. Der Rotor 14 ist
auf einer Rotorwelle 18 befestigt, die mit ihrem unteren
Ende im Strömungskanal 13 gelagert ist. Zu diesem Zweck
ist im unteren Gehäuseteil 19 des Druchflußmessers 10
ein Lager 20 eingesetzt. Ein oberes Gehäuseteil 21
schließt die Ausströmkammer 15 nach oben hin ab. Sie
trägt ein zweites Lager 22 für das obere Ende der Rotorwelle 18. Um im Strömungskanal 13 eine gleichgerichtete
axiale Strömung des Kraftstoffs zu bekommen, sind an
den Wänden des Strömungskanals drei in Achsrichtung des
Rotors 14 verlaufende Leitrippen 23 angeordnet, welche
gleichmäßig am Umfang des Strömungskanals verteilt sind.

Aus Figur 2, die einen Querschnitt des Durchflußmessers
nach der Linie II-II aus Figur 1 darstellt, ist erkennbar,
daß der oberhalb des Strömungskanals 13 angeordnete Rotor
14 von der Ausströmkammer 15 konzentrisch umgeben ist.
Der im Strömungskanal 13 hochfließende Kraftstoff tritt
im Bereich der Rotorachse vom Strömungskanal 13 in den
Rotor 14 ein. Durch zwei Austrittöffnungen 24 am Außenumfang des kreisscheibenförmigen Rotors 14 tritt der
Kraftstoff in Umfangsrichtung des Rotors 14 wieder aus
und gelangt so in die Ausströmkammer 15. Die Austrittsöffnungen 24 des Rotors 14 verlaufen annähernd tangential. Sie liegen am Außenumfang des Rotors 14 einander
gegenüber und verlaufen in gleicher Umfangsrichtung. Der
Rotor 14 hat innen zwei vom Bereich der Rotorachse zu
den Austrittsöffnungen 24 führende Laufschaufeln 25, die

...

in Form einer logarithmischen Spirale von innen nach außen verlaufen. Durch diese Form der Laufschaufeln 25 soll der Strömungswiderstand herabgesetzt und eine Wirbelbildung des durchströmenden Kraftstoffs verhindert werden.

Wie Figur 3 zeigt, ist der Rotor 14 mit einer Nabe 26 auf der Rotorwelle 18 befestigt, welche von oben in den Strömungskanal 13 hineinragt. Die Leitrippen 23 im Strömungskanal 13 sind um diesen Bereich der Rotornabe 26 herum angeordnet. Unmittelbar darüber befinden sich die inneren Enden der Laufschaufeln 25 des Rotors 14. Sie sind zur Abbremsung des Rotors 14 bei Leerlauf an Innenkanten 25a zum Strömungskanal 13 hin abgeschrägt. Der Rotor 14 ist an seiner Unterseite durch eine Platte 27 abgedeckt, die an ihrem Umfang gleichmäßig verteilte lamellenartige Vorsprünge 28 hat. Diese Vorsprünge 28 wirken mit einem opto-elektrischen Geber 29 zusammen, welcher am Boden der Ausströmkammer 15 eingesetzt ist und die Bewegung des Rotors 14 in elektrische Impulse umsetzt.

Der Einlaßraum 11 ist im vorderen, für einen Ausgleich von Druckschwankungen vorgesehenen Bereich 11a über einen Eichkanal 9 mit der Ausströmkammer 15 verbunden, der einen Bypass zum Rotor 14 bildet. Der Eichkanal 9 hat zur Ausströmkammer 15 hin einen Schlitz 8, der in Umfangsrichtung der Ausströmkammer 15 etwa 2 mm lang und 0,2 mm breit ist. Der Schlitz 8 ist an der Wandung der Ausströmkammer 15 von einer Blende 7 abdeckbar, die an dem Gehäuseteil 21 angeformt ist.

Im folgenden wird die Wirkungsweise des Durchflußmessers 10 nach Figur 1 bis 3 näher erläutert. Sobald Kraftstoff gefördert wird, fließt dieser in Pfeilrichtung durch die Einlaßöffnung 12 in den Strömungskanal 13. Er wird dort durch die Leitrippen 23 gleichgerichtet, so daß er in Achsrichtung des Rotors innerhalb des Strömungskanals 13 nach oben steigt. Am oberen Ende des

...

Strömungskanals 13 tritt der Kraftstoff im Bereich der Rotorachse in den Rotor 14 ein, fließt entlang der Laufschaufeln 25 und tritt außen am Rotor 14 durch die Austrittsöffnungen 24 wieder aus. Der Kraftstoff übt dabei auf die Laufschaufeln 25 eine Kraft aus, durch welche der Rotor 14 gedreht wird. An den Austrittsöffnungen 24 des Rotors 14 fließt nun der Kraftstoff in Umfangsrichtung der Ausströmkammer 15, während sich der Rotor 14 in die entgegengesetzte Umfangsrichtung dreht. Über die Auslaßöffnung 16 fließt schließlich der Kraftstoff aus der Ausströmkammer 15 zum Auslaßkanal 17 und von dort in eine Kraftstoffleitung. Je nach Fördermenge wird der Rotor 14 durch den Kraftstoff mehr oder weniger schnell gedreht. Der opto-elektrische Geber 29 gibt dabei mit jedem an ihm vorbeibewegten Vorsprung 28 der Rotorplatte 17 einen elektrischen Impuls ab. Aus der Impulsfrequenz kann der augenblickliche Kraftstoffverbrauch der Brennkraftmaschine ermittelt und angezeigt werden und aus der Summe der Impulse kann die verbrauchte Kraftstoffmenge und damit gegebenenfalls die noch vorhandene Kraftstoffmenge ermittelt und angezeigt werden.

Die Impulsfrequenz ist so festgelegt, daß selbst bei Durchflußmessern, die an der Grenze der Fertigungstoleranzen liegen, die Impulszahl bei völlig abgedecktem Eichkanal 9 zu hoch wäre. Durch Verdrehen des die Ausströmkammer 15 nach oben abschließenden, deckelartigen Gehäuseteiles 21 wird nun die Blende 7 soweit geschwenkt, daß sie den Schlitz 8 des Eichkanales 9 teilweise abdeckt. Es kann nun eine sehr geringe Kraftstoffmenge unter Umgehung des Rotors 14 in die Ausströmkammer 15 gelangen. Dadurch wird bei konstanter Durchflußgeschwindigkeit die Rotordrehzahl verringert. Die zur Eichung des Durchflußmessers 10 vorgegebene Impulszahl kann auf diese Weise mit einer mehr oder weniger weiten Abdeckung des Schlitzes
8 durch Verdrehen des Gehäuseteiles 21 eingestellt werden.

Außerdem können Gas- bzw. Dampfblasen im Kraftstoff zu
falschen Meßergebnissen führen, wenn sie zum Rotor 14 gelangen. Dies wird jedoch vermieden, indem der Eichkanal
9 im oberen Bereich des Einlaßraumes 11 bzw. des Bereiches
11a angeordnet ist und die Blende 7 einen Mindestquerschnitt des Schlitzes 8 offenläßt.

Ein solcher Durchflußmesser kann sowohl kleinste Durchflußmengen bis zu 0,5 Liter pro Stunde, z.B. für den
Leerlauf einer Brennkraftmaschine als auch große Mengen
bis zu 100 Liter pro Stunde bei Vollastbetrieb der
Maschine mit ausreichender Genauigkeit messen. Für die
Genauigkeit ist es besonders wichtig, daß der Rotor
bei einer Schnellabschaltung der Kraftstofförderung
möglichst wenig nachläuft. Dies wird bei dem Ausführungsbeispiel nach Figur 1 bis 3 einerseits durch die
äußere Form des Rotors 14 und die Form der Ausströmkammer 15 bewirkt, da der Kraftstoff in der Ausströmkammer 15 am Umfang des Rotors 14 entgegengesetzt
zu diesen umläuft, ihn durch Strömungswiderstände abbremst und schließlich oberhalb des Rotors 14 aus der
Kammer 15 abfließt. Außerdem wird der Rotor 14 durch die
im Kraftstoff umlaufenden Vorsprünge 28 an der Rotorrückseite abgebremst. Darüber hinaus wird der Rotor 14 auch
noch dadurch abgebremst, daß die inneren Enden der Laufschaufeln 25 mit ihren abgeschrägten Kanten 25a bei
einem leerlaufenden Rotor 14 den Kraftstoff in diesem
Bereich um die Rotorachse verwirbeln. Dieser Wirbel setzt sich stromaufwärts im Strömungskanal 13 fort
und wird hier durch die Leitrippen 13 abgebremst. Auf
diese Weise wird dem Rotor 14 Bewegungsenergie entzogen
bzw. er wird, insbesondere bei einer schnellen Verringerung der Kraftstoffdurchflußmenge, abgebremst.

Figur 4 zeigt an einem weiteren Ausführungsbeispiel
der Erfindung einen Durchflußmesser 30, bei dem der
Rotor 31 durch einen T-förmigen Rohrabschnitt gebildet ist, dessen gegenüberliegenden Enden verschlossen
sind. Der in Figur 5 raumbildlich dargestellte Rotor 31
ist auf einer Rotorwelle 32 befestigt, die einerseits
im Einlaßraum 33 und andererseits in der Ausströmkammer
34 gelagert ist. Der Strömungskanal 35 ist hier durch den
die Rotorwelle 32 umgebenden Rohransatz 35a gebildet, in
dem der Kraftstoff in Axialrichtung hochsteigt. Er teilt
sich dann im Rohrabschnitt 31a, an dessen gegenüberliegenden Endbereichen je eine tangential zur Rotorachse verlaufende Austrittsöffnung 36 angebracht ist.
Der Kraftstoff tritt aus diesen zwei Austrittsöffnungen
36 aus und durch die Rückstoßkräfte wird der Rotor 31
innerhalb der Ausströmkammer 34 in Pfeilrichtung (Figur
5) gedreht. Durch einen opto-elektrischen Geber 37 werden die Umdrehungen des Rotors 31 abgefühlt und in
elektrische Signale für die Anzeige der Durchflußmenge
umgesetzt. Der Einlaßraum 33 des Durchflußmessers 30
ist an eine Zuflußleitung 38 und die Ausströmkammer
34 an eine Abflußleitung 39 angeschlossen.

Durch den relativ einfachen Aufbau des Rotors 30 ist die
Abbremsung bei einer Schnellabschaltung der Kraftstoffförderung nicht ausreichend. Ein solcher Durchflußmesser läßt sich aber in sehr vorteilhafter Weise immer
dann verwenden, wenn die Flüssigkeit in einer Förder-

...

leitung zu einem Verbraucher gefördert wird und die dort
nicht verbrauchte Flüssigkeit über eine Rückstromleitung
wieder zurückfließt. Wie in einem weiteren Ausführungsbeispiel nach Figur 6 dargestellt ist, wird hierbei ein
zweiter Rotor 40 auf der gleichen Rotorwelle 32a in einer
zweiten Ausströmkammer 41 angeordnet. Über eine Zuflußleitung 42 wird dort die zurückfließende, nicht verbrauchte Flüssigkeit durch den Einlaßraum 43, den Strömungskanal 44 in den Rotor 40 geleitet. Durch Austrittsöffnungen 45 fließt sie dann in die Ausströmkammer 41
und von dort zur Abflußleitung 46. Die Austrittsöffnungen
45 an den Rohrabschnittsenden des zweiten Rotors 40 sind
zu den Austrittsöffnungen 36 des ersten Rotors 31 in entgegengesetzter Umfangsrichtung angeordnet. Dadurch wird
dieser Rotor 40 beim Durchströmen einer Flüssigkeit gegenüber dem darunter angeordneten Rotor 31 in entgegengesetzter
Drehrichtung arbeiten. Da beide Rotoren 31 und 40 auf der
gleichen Rotorwelle 32a befestigt sind, werden an ihnen
entgegengesetzte Drehmomente wirksam, wobei im gesamten System die Differenz zwischen der gesamten Fördermenge und der Rücklaufmenge als resultierende Kraft
wirksam bleibt und die beiden Rotoren 31 und 40 in der
Drehrichtung des unteren Rotors 31 dreht. Sobald kein
Kraftstoff von der Brennkraftmaschine verbraucht wird,
sind Förder- und Rückflußmenge gleich groß. Die beiden
Drehmomente an den Rotoren 31 und 40 heben sich auf und
das System bleibt stehen.

Eine Drehrichtungserkennung ist beim opto-elektrischen
Geber 29 und 37 nicht erforderlich, weil der Rotor des
Durchflußmessers bei einer Umkehrung der Strömungsrichtung der Flüssigkeit stehen bleibt.

R.  17375  i.P.

1.4.1982  Ws/Hm

ROBERT BOSCH GMBH, 7000 STUTTGART 1


Ansprüche


1. Durchflußmesser für Flüssigkeiten mit einem von der
strömenden Flüssigkeit in einer bestimmten Drehrichtung
angetriebenen Rotor, der im Gehäuse des Durchflußmessers
gelagert ist, dessen Drehzahl durch eine Meßeinrichtung
erfaßbar ist und in dem die Strömung im Meridianschnitt
gesehen, um 90° umgelenkt wird, dadurch gekennzeichnet,
daß in Strömungsrichtung gesehen dem Rotor (14, 31, 40)
ein Strömungskanal (13, 35, 44) vorgeordnet und eine den
Rotor umgebende Ausströmkammer (15, 34, 41) nachgeordnet
ist und  daß die Flüssigkeit im Bereich der Rotorachse
(18, 32) aus dem Strömungskanal in den Rotor eintritt
und durch Austrittsöffnungen (24, 36, 45) am Außenumfang
des Rotors im Umfangsrichtung wieder austritt.


2. Durchflußmesser nach Anspruch 1, dadurch gekennzeichnet, daß der Rotor (14, 31, 40) an seinem Außenumfang zwei einander gegenüberliegende, im gleicher Umfangsrichtung verlaufende Austrittsöffnungen (24, 26,
45) hat.


                                                    ...

3. Durchflußmeser nach Anspruch 2, dadurch gekennzeichnet, daß die Austrittsöffnungen (24, 36, 45) annähernd tangential verlaufen.

4. Durchflußmeser nach Anspruch 3, dadurch gekennzeichnet, daß der Rotor (14) kreisscheibenförmig ausgebildet ist und vom Bereich der Rotorachse zu den Austrittsöffnungen (24) führende Laufschaufeln (25) hat.

5. Durchflußmesser nach Anspruch 4, dadurch gekennzeichnet, daß die Laufschaufeln (25) spiralförmig nach außen verlaufen.

6. Durchflußmeser nach einem der vorherigen Ansprüche, dadurch gekennzeichnet, daß der Rotor (14) mit einer in den Strömungskanal (13) reichenden Nabe (26) auf einer Rotorwelle (18) befestigt ist, die mit einem Ende im Strömungskanal (13) und mit ihrem anderen Ende in der Ausströmkammer (15) drehbar gelagert ist.

7. Durchflußmesser nach Anspruch 6, dadurch gekennzeichnet, daß an der Innenwandung des Strömungskanales (13) mehrere in Achsrichtung des Rotors (14) verlaufende Leitrippen (23) angeordnet sind.

...

8. Durchflußmesser nach Anspruch 7, dadurch gekennzeichnet, daß die Innenkanten (25a) der Laufschaufeln (25) zum Strömungskanal (13) hin abgeschrägt sind.

9. Durchflußmesser nach einem der Ansprüche 2 bis 8, dadurch gekennzeichnet, daß die aus den Austrittsöffnungen (24) austretende Flüssigkeit in der Ausströmkammer (15) in entgegengesetzter Richtung zum Rotor (14) umläuft und oberhalb des Rotors aus der Ausströmkammer abfließt.

10. Durchflußmesser nach einem der Ansprüche 1 bis 3, dadurch gekennzeichnet, daß der Rotor (31, 40) durch einen T-förmigen Rohrabschnitt (31a) gebildet ist, dessen gegenüberliegenden Enden verschlossen und je mit einer tangential zur Rotorachse verlaufenden Austrittsöffnung (36, 45) versehen sind.

11. Durchflußmesser nach einem der vorherigen Ansprüche, dadurch gekennzeichnet, daß auf der gleichen Rotorwelle (32a) ein zweiter Rotor (40) in einer zweiten Ausströmkammer (41) und mit einem zweiten Strömungskanal (44) für eine zurückfließende, nicht verbrauchte Flüssigkeit vorgesehen ist, welcher zum ersten Rotor (31) in entgegengesetzter Drehrichtung arbeitet.

...

12. Durchflußmesser nach Anspruch 11, dadurch gekennzeichnet, daß die Austrittsöffnungen (45) des zweiten Rotors (40) zu denen des ersten Rotors (31) in entgegensetzter Umfangsrichtung liegen.

13. Durchflußmesser nach Anspruch 1, dadurch gekennzeichnet, daß der Einlaßraum (11) über einen Eichkanal (9) unter Umgehung des Rotors (14) mit der Ausströmkammer (15) verbunden ist, wobei der Eichkanal (9) in seinem Querschnitt einstellbar ist.

14. Durchflußmesser nach Anspruch 13, dadurch gekennzeichnet, daß der Eichkanal (9) zur Ausströmkammer (15) hin einen Schlitz (18) hat, der von einer verschwenkbaren Blende (7) abdeckbar ist.

15. Durchflußmesser nach Anspruch 14, dadurch gekennzeichnet, daß die Blende (7) an ein die Ausströmkammer (15) nach oben abschließendes Gehäuseteil (21) angeformt ist, mit dem die Blende (7) den Schlitz (8) des Eichkanals (9) durch Verdrehen mehr oder weniger weit abdeckt.

16. Durchflußmesser nach Anspruch 15, dadurch gekennzeichnet, daß zum Abführen von Gasblasen der Eichkanal (9) im oberen Bereich des Einlaßraumes (11, 11a) angeordnet ist und die Blende (7) einen Mindestquerschnitt des Schlitzes (8) offen läßt.

FIG. 1

FIG. 2

FIG. 3

FIG. 4

FIG. 5

FIG. 6

Europäisches
Patentamt    **EUROPÄISCHER RECHERCHENBERICHT**    0076940

Nummer der Anmeldung

| | **EINSCHLÄGIGE DOKUMENTE** | | EP 82108654.3 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR - A - 346 444 (RICHAUD)<br><br>* Zusammenfassung; Fig. 1,2 *<br><br>--- | 1,2,3,6,<br>9,10 | G 01 F 1/05<br><br>G 01 F 1/28 |
| X | DE - A1 - 2 448 374 (RISSER)<br><br>* Patentansprüche; Fig. 2,3 *<br><br>-- | 1,4,5,9 | |
| D,A | DE - A1 - 2 911 826 (VDO ADOLF SCHINDLING)<br><br>* Patentanspruch 1; Fig. 1 *<br><br>-- | | |
| D,A | US - A - 3 867 840 (BAATZ)<br><br>* Zusammenfassung; Fig. 2,6 *<br><br>---- | | |

| | | | **RECHERCHIERTE SACHGEBIETE (Int. Cl. 3)** |
|---|---|---|---|
| | | | G 01 F 1/00 |

Der vorliegende Recherchenbericht wurde für alle Patentansprüche erstellt.

| Recherchenort<br>WIEN | Abschlußdatum der Recherche<br>24-01-1983 | Prüfer<br>STÖGER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82